(19) Europäisches Patentamt
European Patent Office
Office européen des brevets

(11) **EP 4 607 491 A1**

(12) **EUROPEAN PATENT APPLICATION**
published in accordance with Art. 153(4) EPC

(43) Date of publication:
**27.08.2025 Bulletin 2025/35**

(51) International Patent Classification (IPC):
***G08G 1/14*** *(2006.01)*  ***B60W 30/06*** *(2006.01)*

(21) Application number: **23893179.4**

(52) Cooperative Patent Classification (CPC):
**B60W 30/06; G01D 21/02; G08G 1/14**

(22) Date of filing: **30.06.2023**

(86) International application number:
**PCT/CN2023/104957**

(87) International publication number:
**WO 2024/109079 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022 CN 202211469399**

(71) Applicant: **Shenzhen Yinwang Intelligent
Technologies Co., Ltd.
Shenzhen, Guangdong 518129 (CN)**

(72) Inventors:
• **LIU, Guangfeng**
**Shenzhen, Guangdong 518129 (CN)**
• **SU, Xiaoran**
**Shenzhen, Guangdong 518129 (CN)**
• **JIANG, Yu**
**Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **PARKING SPACE OPENING DETECTION METHOD AND DEVICE**

(57) A parking space opening detection method and apparatus are provided, and relate to the field of vehicle technologies. The method may include: obtaining at least one piece of feature information of a parking space; and determining parking space information of the parking space based on the at least one piece of feature information and a parking space detection model, where the parking space information includes a parking space opening of the parking space. According to the method, accuracy of parking space opening detection and a generalization capability of the parking space detection model can be improved.

S310: Obtain at least one piece of feature information of a parking space

S320: Determine parking space information of the parking space based on the at least one piece of feature information and a parking space detection model, where the parking space information includes a parking space opening of the parking space

FIG. 3

## Description

## CROSS-REFERENCE TO RELATED APPLICATIONS

This application claims priority to Chinese Patent Application No. 202211469399.9, filed with China National Intellectual Property Administration on November 22, 2022 and entitled "PARKING SPACE OPENING DETECTION METHOD AND APPARATUS", which is incorporated herein by reference in its entirety.

## TECHNICAL FIELD

This application relates to the field of vehicle technologies, and in particular, to a parking space opening detection method and apparatus.

## BACKGROUND

With development of automated driving technologies, automated parking technologies rapidly rise, for example, an automated parking assist (automated parking assist, APA) technology, a remote parking assist (remote parking assist, RPA) technology, and an automated valet parking (automated valet parking, AVP) technology. Parking space detection needs to be performed in an automated parking process. In some scenarios, to ensure smooth parking, parking space type prediction and parking space opening prediction further need to be performed. In this case, how to get rid of a limitation imposed by a use scenario and further improve accuracy and a generalization capability of these technologies is still an important problem to be urgently resolved.

## SUMMARY

Embodiments of this application provide a parking space opening detection method and apparatus, to improve accuracy of parking space opening detection and improve a generalization capability of a parking space detection model.

According to a first aspect, an embodiment of this application provides a parking space opening detection method. The method may be implemented by a parking space opening detection apparatus. The parking space opening detection apparatus may be an independent device, or may be a chip or a component in a device, or may be a software module, or may be deployed on a vehicle, or a vehicle-mounted device or an intelligent device on a vehicle. A product form of the parking space opening detection apparatus is not limited in this embodiment of this application. The method may include: obtaining at least one piece of feature information of a parking space; and determining parking space information of the parking space based on the at least one piece of feature information and a parking space detection model, where the parking space information includes a parking space opening of the parking space. For example, the parking space detection model may be specifically a parking space opening detection model. In a specific implementation, the parking space detection model may be a decision tree model.

According to the foregoing method, the parking space opening detection apparatus may predict the parking space opening based on a preset parking space detection model and different parking space feature information extracted for the parking space, to assist in determining whether the parking space can park a vehicle and an entrance from which the vehicle should travel into the parking space. The method helps improve accuracy of parking space opening detection and improve a generalization capability of the parking space detection model.

With reference to the first aspect, in a possible design, the at least one piece of feature information includes at least one of the following feature information of the parking space: a length, a width, a type, information about another parking space in a predetermined range around the parking space, information about obstacles inside and outside the parking space, information about a distance between the parking space and the vehicle, and coordinate information of the parking space in a coordinate system of the vehicle. It should be understood that this is merely an example of describing the parking space feature information and does not constitute any limitation. In a specific implementation, other parking space feature information may be further obtained according to a service requirement, an application scenario, or the like. This is not limited in this embodiment of this application.

With reference to the first aspect, in a possible design, the obtaining at least one piece of feature information of a parking space may include: obtaining environment information inside the parking space and/or outside the parking space by using at least one sensor associated with the vehicle; and extracting the at least one piece of feature information from the environment information inside the parking space and/or outside the parking space.

According to the foregoing method, the parking space opening detection apparatus may obtain the parking space feature information through different means, to provide a flexible parking space detection manner.

With reference to the first aspect, in a possible design, the method further includes: obtaining first prediction data based on test data and a first model; obtaining second prediction data based on the test data and a second model, where the first model and the second model are deep learning models, the first model is obtained through training by using data in a first range, the second model is obtained through training by using data in a second range, and the first range is greater than the second range; obtaining data of a target scenario (for example, a difficulty scenario or a diversified scenario) based on a difference between the first prediction data and the second prediction data; and obtaining a training data set based on the data of the target scenario, where the training data set is used to obtain the parking space detection model through training.

According to the foregoing method, the parking space opening detection apparatus may separately perform prediction by using same test data and different models, and obtain the data of the target scenario by using a prediction difference of the different models, to enrich the training data set and improve robustness of the parking space detection model in this embodiment of this application. It should be noted that, in this embodiment of this application, the first model and the second model may be existing deep learning models. The first model is obtained through training by using data in a large range, and therefore has a complex model structure and a large quantity of parameters. Although prediction accuracy of the first model is better than prediction accuracy of the second model, when the first model is applied to the field of vehicle-assisted driving, real-time performance of the first model is poorer than real-time performance of the second model. In this embodiment of this application, related data in the difficulty scenario can be supplemented based on the difference between the prediction data obtained by using the first model and the prediction data obtained by using the second model, thereby helping improve robustness of a to-be-trained parking space detection model.

With reference to the first aspect, in a possible design, the parking space detection model includes a decision tree model. For example, a model parameter of the decision tree model includes at least one of the following: a quantity of decision trees, a maximum depth of a decision tree, a quantity of classes, a learning rate, a positive sample weight/negative sample weight, and a sample random sampling rate and a sampling frequency.

According to a second aspect, an embodiment of this application provides a parking space opening detection apparatus. The apparatus may include: an obtaining unit, configured to obtain at least one piece of feature information of a parking space; and a determining unit, configured to determine parking space information of the parking space based on the at least one piece of feature information and a parking space detection model, where the parking space information includes a parking space opening of the parking space.

With reference to the second aspect, in a possible design, the at least one piece of feature information includes at least one of the following feature information of the parking space: a length, a width, a type, information about another parking space in a predetermined range around the parking space, information about obstacles inside and outside the parking space, information about a distance between the parking space and a vehicle, and coordinate information of the parking space in a coordinate system of the vehicle.

With reference to the second aspect, in a possible design, the obtaining unit is specifically configured to: obtain environment information inside the parking space and/or outside the parking space by using at least one sensor associated with the vehicle; and extract the at least one piece of feature information from the environment information inside the parking space and/or outside the parking space.

With reference to the second aspect, in a possible design, the apparatus may further include: a prediction unit, configured to: obtain first prediction data based on test data and a first model; and obtain second prediction data based on the test data and a second model, where the first model and the second model are deep learning models, the first model is obtained through training by using data in a first range, the second model is obtained through training by using data in a second range, and the first range is greater than the second range. The obtaining unit is further configured to: obtain data of a target scenario based on a difference between the first prediction data and the second prediction data; and obtain a training data set based on the data of the target scenario, where the training data set is used to obtain the parking space detection model through training.

With reference to the second aspect, in a possible design, the parking space detection model includes a decision tree model. For example, a model parameter of the decision tree model includes at least one of the following: a quantity of decision trees, a maximum depth of a decision tree, a quantity of classes, a learning rate, a positive sample weight/negative sample weight, and a sample random sampling rate and a sampling frequency.

According to a third aspect, an embodiment of this application provides a communication apparatus, including a processor and a memory. The memory is configured to store a program, and the processor is configured to execute the program stored in the memory, so that the apparatus implements the method according to any one of the first aspect and the possible designs of the first aspect.

According to a fourth aspect, an embodiment of this application provides a computer-readable storage medium. The computer-readable storage medium stores program code, and when the program code is run on a computer, the computer is enabled to perform the method according to any one of the first aspect and the possible designs of the first aspect.

According to a fifth aspect, an embodiment of this application provides a computer program product. When the computer program product runs on a computer, the computer is enabled to perform the method according to any one of the first aspect and the possible designs of the first aspect.

According to a sixth aspect, an embodiment of this application provides a terminal device, including units configured to implement the method according to any one of the first aspect and the possible designs of the first aspect. For example, the terminal device includes but is not limited to: an intelligent transportation device (such as a car, a ship, an unmanned aerial vehicle, a train, or a truck), an intelligent manufacturing device (such as a robot, an industrial device, intelligent logistics, or an intelligent factory), and an intelligent terminal (such as a mobile phone, a computer, a tablet computer, a palmtop computer, a desktop computer, a headset, a stereo, a wearable device, or a vehicle-mounted device).

In embodiments of this application, based on the implementations according to the foregoing aspects, the implementations may be further combined to provide more implementations.

For technical effect that can be achieved in any possible implementation of any one of the second aspect to the sixth aspect, refer to descriptions of technical effect that can be achieved in any possible implementation of any one of the first aspect and the second aspect. Repeated details are not described.

**BRIEF DESCRIPTION OF DRAWINGS**

FIG. 1a is a diagram of a parking space border according to this application;
FIG. 1b is a diagram of a parking space inclination angle according to this application;
FIG. 2a is a diagram of a system architecture according to this application;
FIG. 2b is a diagram of another system architecture according to this application;
FIG. 3 is a schematic flowchart of a parking space opening detection method according to an embodiment of this application;
FIG. 4 is a diagram of a principle according to an embodiment of this application;
FIG. 5 is a diagram of generating training data according to an embodiment of this application;
FIG. 6 is a diagram of data mining according to an embodiment of this application;
FIG. 7 is a diagram of a function of parking space information according to an embodiment of this application;
FIG. 8 is a diagram of a parking space opening detection apparatus according to an embodiment of this application; and
FIG. 9 is a diagram of a communication apparatus according to an embodiment of this application.

**DESCRIPTION OF EMBODIMENTS**

The following describes in detail embodiments of this application with reference to accompanying drawings.

The following explains and describes some terms used in this application. It should be noted that the explanations are intended for ease of understanding by a person skilled in the art, but do not constitute a limitation on the protection scope claimed in this application.

(1) Entrance line, segmentation line, and parking marking point:

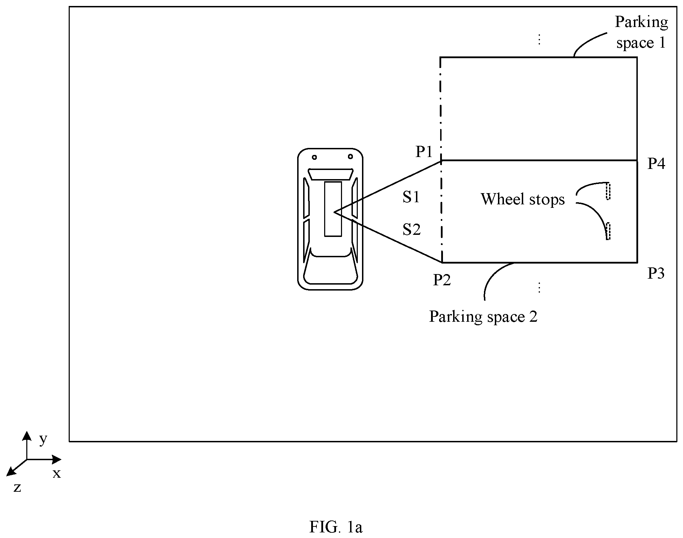

FIG. 1a is a diagram of a parking space border according to this application.

The parking space border usually includes four borders. A parking space 2 is used as an example. P1P2 is referred to as an entrance line. P1P4 and P2P3 may both be referred to as segmentation lines, and are actually isolation boundary lines between a parking space 1 and another parking space (for example, the parking space 2), a vacant location, a wall, a road edge, or the like. An intersection point of the entrance line and the segmentation line may be referred to as an entrance parking space point (or referred to as a parking marking point), that is, P1 and P2 in FIG. 1a are referred to as entrance parking space points, and P3 and P4 may be referred to as non-entrance parking space points. P1, P2, P3, and P4 may be collectively referred to as parking space points, and the parking space points may also be understood as corner points of corners of the parking space border. Therefore, the parking space points may also be referred to as parking space corner points. Usually, the segmentation line is perpendicular to the entrance line. A parking space whose segmentation line is perpendicular to an entrance line may be referred to as a vertical parking space or a parallel parking space.

In some embodiments, to safely park a vehicle in a parking space border, a wheel stop (indicated by a dashed-dotted-line box) may be further included in a location that is in the parking space border and that is close to a rear of the vehicle (for example, close to a segmentation line P3P4), so that the vehicle stops in time after traveling into the parking space border, to avoid collision with another obstacle (for example, a wall or another vehicle) or obstructing traveling of another vehicle. During actual application, the wheel stop may be of a separated type or an integrated type. This is not limited in this embodiment of this application.

(2) Parking space inclination angle:

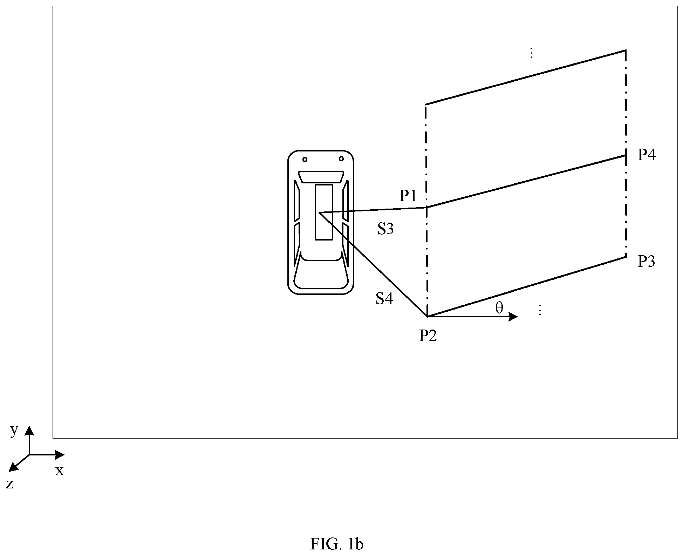

The parking space inclination angle is also referred to as an inclination angle of a segmentation line or an inclination angle of a parking space border, and is an included angle between the segmentation line and an x axis of an image. Usually, the included angle between the parking space border segmentation line and the x-axis of the image is θ. Refer to FIG. 1b.

It should be noted that, for a tilted parking space, a parking space inclination angle needs to be determined. In this type of algorithm, the parking space inclination angle may be determined by using a template matching method. This is not limited in this embodiment of this application.

**(3) Distance between a parking space and a vehicle:**

The distance between the parking space and the vehicle is distances between a center of the vehicle and entrance parking space points. With reference to FIG. 1a, a distance S1 and a distance S2 indicate the distance between the parking space and the vehicle. With reference to FIG. 1b, a distance S3 and a distance S4 may indicate the distance between the parking space and the vehicle. It should be understood that in different method embodiments, the distance between the parking space and the vehicle may be customized according to a requirement of a parking space detection algorithm. For example, the distance between the parking space and the vehicle may alternatively be distances between centers of four borders of the parking space and a head of the vehicle. In some embodiments, different distance calculation methods may alternatively be configured in a same detection algorithm, so that when the vehicle and the parking space are in a different case, a distance calculation method is adaptively determined based on an actual case, to calculate the distance between the parking space and the vehicle. This is not limited in this embodiment of this application.

The following shows two possible system architectures to which this application may be applied.

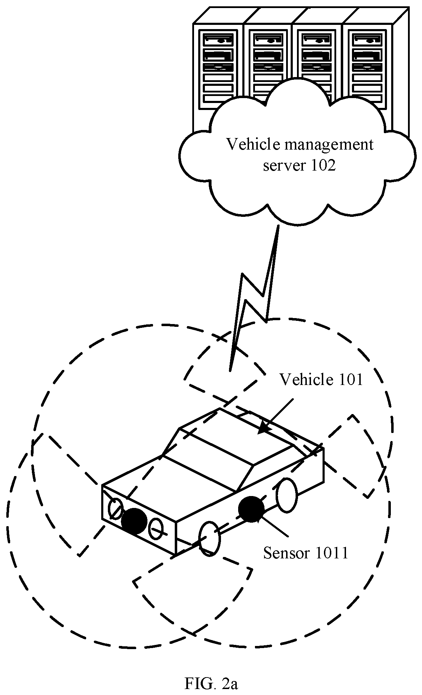

Based on the foregoing content, FIG. 2a is a diagram of a system architecture to which this application may be applied. A system may include a vehicle 101 and a vehicle management server 102 (or referred to as a parking space management server).

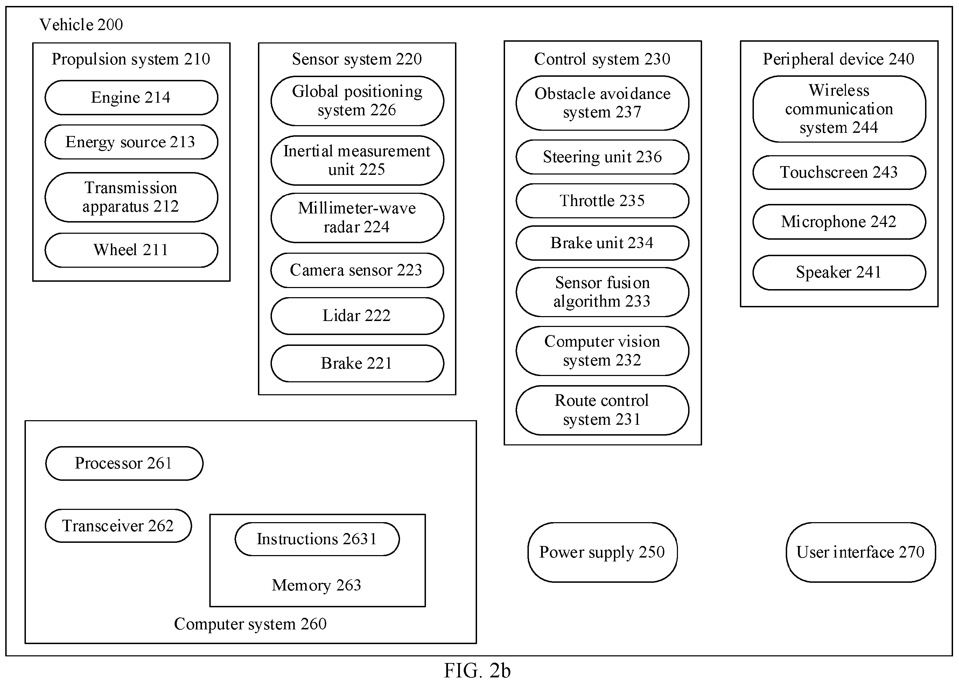

The vehicle 101 is a vehicle that has a function of capturing an image of a surrounding environment and a remote communication function. For example, a sensor 1011 is disposed on the vehicle 101, to collect environment information around the vehicle. The sensor may be, for example, an image capturing device. The image capturing device may be, for example, at least one of the following: a fisheye camera, a monocular camera, a depth camera, and the like. The image capturing device may be configured to capture a visual image of a parking space in which the vehicle is to be parked, and may also be configured to collect environment information around the parking space. In FIG. 2a, an example in which sensors are disposed in four directions (with reference to FIG. 2a), namely, front, rear, left, and right directions of the vehicle is used, to collect environment information in the four directions, namely, front, rear, left, and right directions of the vehicle. A field of view of each of four fisheye cameras may be greater than 180 degrees, so that a surrounding environment of the parking space can be comprehensively captured. It should be understood that a larger field of view of the sensor 1011 indicates a larger range that can be sensed by the sensor. The remote communication function of the vehicle 101 may usually be implemented by a communication module disposed on the vehicle 101. The communication module includes, for example, a telematics box (telematics box, TBOX) or a wireless communication system (refer to the following descriptions of a wireless communication system 244 in FIG. 2b).

The vehicle management server 102 may assist the vehicle in implementing a parking space detection function. The vehicle management server 102 is a single server, or may be a server cluster including a plurality of servers. The vehicle management server 102 may alternatively be, for example, a cloud server (or referred to as a cloud, a cloud client, a cloud client server, a cloud client controller, an internet of vehicles server, or the like). The cloud server is a general term for a device or a component with a data processing capability. For example, the cloud server may include a physical device such as a host or a processor, may also include a virtual device such as a virtual machine or a container, and may further include a chip, an integrated circuit, or the like. In addition, the vehicle management server 102 may integrate all functions into one independent physical device, or may separately deploy different functions on different physical devices. This is not limited in this application. Usually, one vehicle management server 102 may communicate with a plurality of vehicles 101.

It should be noted that quantities of vehicles 101, vehicle management servers 102, and sensors 1011 in the system architecture shown in FIG. 2a are merely examples. This is not limited in this application. In addition, the name of the vehicle management server 102 in the system is merely an example. In a specific implementation, the vehicle management server 102 may alternatively have another possible name, for example, may be referred to as a parking space opening detection apparatus. This is not limited in this application. In a possible implementation, functions of a parking space opening detection apparatus may be separately deployed on different devices. For example, some functions of the parking space opening detection apparatus may be deployed on a vehicle management server 102, and the other functions may be deployed on a vehicle. This is not limited in this embodiment of this application. It should be understood that the vehicle 101 in FIG. 2a may be a vehicle in FIG. 2b.

FIG. 2b is a diagram of another system architecture to which this application may be applied. In an embodiment, a vehicle may be configured to be in a fully or partially automated driving mode. Components coupled to or included in a vehicle 200 may include a propulsion system 210, a sensor system 220, a control system 230, a peripheral device 240, a power supply 250, a computer system 260, and a user interface 270. The components of the vehicle 200 may be configured to work in a manner of interconnection with each other and/or interconnection with other components coupled to various systems. For example, the power supply 250 may supply power to all components of the vehicle 200. The computer system 260 may be configured to receive data from the propulsion system 210, the sensor system 220, the control system 230, and the peripheral device 240, and control the data. The computer system 260 may be further configured to generate display of an image on the user interface 270 and receive an input from the user interface 270.

It should be noted that, in another example, the vehicle 200 may include more, fewer, or different systems, and each system may include more, fewer, or different components. In addition, the shown systems and components may be combined or split in any manner. This is not specifically limited in this application.

The propulsion system 210 may be configured to provide power for the vehicle 200 to move. As shown in FIG. 2b, the propulsion system 210 may include an engine/a motor 214, an energy source 213, a transmission (transmission) apparatus 212, and a wheel/tyre 211. In addition, the propulsion system 210 may additionally or alternatively include another component other than the components shown in FIG. 2b. This is not specifically limited in this application.

The sensor system 220 may include several sensors configured to sense information about an environment in which the vehicle 200 is located. As shown in FIG. 2b, the sensors of the sensor system 220 may include a camera sensor 223. The camera sensor 223 may be configured to capture a plurality of images of the surrounding environment of the vehicle 200. The camera sensor 223 may be a static camera or a video camera. Further, optionally, the sensor system 220 may further include a global positioning system (Global Positioning System, GPS) 226, an inertial measurement unit (Inertial Measurement Unit, IMU) 225, a lidar, a millimeter-wave radar, a brake 221 configured to modify a location and/or an orientation of the sensor, and the like. The millimeter-wave radar may sense a target in the surrounding environment of the vehicle 200 by using a radio signal. In some embodiments, in addition to sensing the target, the millimeter-wave radar 224 may be further configured to sense a speed and/or a heading direction of the target. The lidar 224 may sense, by using a laser, the object in the environment in which the vehicle 200 is located. The GPS 226 may be any sensor configured to estimate a geographic location of the vehicle 200. Therefore, the GPS 226 may include a transceiver 262, and estimate a location of the vehicle 200 relative to the earth based on satellite positioning data. In an example, the computer system 260 may be configured to use the GPS 226 with reference to map data to estimate a road on which the vehicle 200 travels. The IMU 225 may be configured to sense a location change and an orientation change of the vehicle 200 based on inertial acceleration and any combination thereof. In some examples, a combination of sensors in the IMU 225 may include, for example, an accelerometer and a gyroscope. In addition, another combination of sensors in the IMU 225 is also possible.

The control system 230 controls an operation of the vehicle 200 and an operation of a component of the vehicle 200. The control system 230 may include various elements, including a steering unit 236, a throttle 235, a brake unit 234, a sensor fusion algorithm 233, a computer vision system 232, a route control system 231, and an obstacle avoidance system 237. The steering unit 236 may operate to adjust the heading direction of the vehicle 200. For example, in an embodiment, the steering unit 236 may be a steering wheel system. The throttle 235 is configured to control an operating speed of the engine 214 and further control a speed of the vehicle 200. The control system 230 may additionally or alternatively include another component other than the components shown in FIG. 2b. This is not specifically limited in this application.

The brake unit 234 is configured to control the vehicle 200 to decelerate. The brake unit 234 may use friction to slow down the wheel 211. In another embodiment, the brake unit 234 may convert kinetic energy of the wheel 211 into a current. The brake unit 234 may alternatively reduce a rotational speed of the wheel 211 in another form, to control the speed of the vehicle 200. The computer vision system 232 may operate to process and analyze the image captured by the camera sensor 223, to identify a target and/or a feature in the surrounding environment of the vehicle 200. The target and/or the feature may include a traffic signal, a road boundary, and an obstacle. The computer vision system 232 may use an object identification algorithm, a structure from motion (structure from motion, SFM) algorithm, a video tracking technology, and another computer vision technology. In some embodiments, the computer vision system 232 may be configured to draw a map for an environment, track a target, estimate a speed of the target, and the like. The route control system 231 is configured to determine a traveling route for the vehicle 200. In some embodiments, the route control system 231 may determine the traveling route (such as a parking route) for the vehicle 200 with reference to data from the sensor system 220, the GPS 226, and one or more predetermined maps. The obstacle avoidance system 237 is configured to identify, evaluate, and avoid or bypass, in another manner, a potential obstacle in the environment of the vehicle 200. In an instance, the control system 230 may additionally or alternatively include a component other than the components shown and described. Alternatively, some of the foregoing components may be removed.

The peripheral device 240 may be configured to allow the vehicle 200 to interact with an external sensor, another vehicle, and/or a user. Therefore, the peripheral device 240 may include, for example, a wireless communication system 244, a touchscreen 243, a microphone 242, and/or a speaker 241. The peripheral device 240 may additionally or alternatively include another component other than the components shown in FIG. 2b. This is not specifically limited in this application.

In some embodiments, the peripheral device 240 provides a means for interaction between a user of the vehicle 200 and the user interface 270. For example, the touchscreen 243 may provide information for the user of the vehicle 200. The user interface 270 may further operate the touchscreen 243 to receive an input from the user. In other cases, the peripheral device 240 may provide a means for the vehicle 200 to communicate with another device located in the vehicle. For example, the microphone 242 may receive audio (for example, a voice command or another audio input) from the user of the vehicle 200. Similarly, the speaker 241 may output audio to the user of the vehicle 200.

The wireless communication system 244 may wirelessly communicate with one or more devices directly or through a communication network. For example, the wireless communication system 244 may use 3G cellular communication such as code division multiple access (code division multiple access, CDMA), EVD0, or global system for mobile communications (global system for mobile communications, GSM)/general packet radio service (general packet radio service, GPRS); or 4G cellular communication such as long term evolution (long term evolution, LTE); or 5G cellular communication. The wireless communication system 244 may communicate with a wireless local area network (wireless local area network, WLAN) by using Wi-Fi. In some embodiments, the wireless communication system 244 may directly communicate with a device by using an infrared link, Bluetooth, or ZigBee. Other wireless protocols, for example, various vehicle communication systems such as the wireless communication system 244, may include one or more dedicated short range communication (dedicated short range communication, DSRC) devices, and these devices may include public and/or private data communication between vehicles and/or roadside stations.

The power supply 250 may be configured to supply power to some or all of the components of the vehicle 200. Therefore, the power supply 250 may include, for example, a rechargeable lithium-ion or lead-acid battery. In some examples, one or more battery groups may be configured to supply power. Other power materials and configurations are also possible. In some examples, the power supply 250 and the energy source 213 may be implemented together, for example, may be implemented in some pure electric vehicles. The components of the vehicle 200 may be configured to work in a manner of interconnection with other components inside and/or outside respective systems of the components. Therefore, the components and the systems of the vehicle 200 may be communicatively linked together through a system bus, a network, and/or another connection mechanism.

Some or all of functions of the vehicle 200 are controlled by the computer system 260. The computer system 260 may include at least one processor 261, and the processor 261 executes instructions 2631 stored in a computer-readable medium such as a memory 263. The computer system 260 may alternatively be a plurality of computing devices that control an individual component or a subsystem of the vehicle 200 in a distributed manner.

The processor 261 may be any conventional processor, for example, a central processing unit (central processing unit, CPU). Alternatively, the processor may be another general-purpose processor, a digital signal processor (digital signal processor, DSP), a graphics processing unit (graphic processing unit, GPU), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. It should be understood that a quantity of sensors and a quantity of processors included in the systems of the vehicle are not limited in this application. Although FIG. 2b functionally illustrates the processor, the memory, and another element of the computer system 260, a person of ordinary skill in the art should understand that the processor, a computer, or the memory may actually include a plurality of processors, computers, or memories that may or may not be stored in a same physical housing. For example, the memory may be a hard disk drive or another storage medium located in a housing different from a housing of the computer system 260. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the memory 263 may include the instructions 2631 (for example, program logic), and the instructions 2631 may be executed by the processor 261 to perform various functions of the vehicle 200, including the functions described above. The memory 214 may also include additional instructions, including instructions used to send data to, receive data from, interact with, and/or control one or more of the propulsion system 210, the sensor system 220, the control system 230, and the peripheral device 240.

In addition to the instructions 2631, the memory 263 may further store data, such as a road map, route information, vehicle data of the vehicle such as a location, a direction, and a speed, and other information. Such information may be used by the vehicle 200 and the computer system 260 when the vehicle 200 operates in an autonomous mode, a semi-autonomous mode, and/or a manual mode.

The user interface 270 is configured to provide information for or receive information from the user of the vehicle 200. Optionally, the user interface 270 may include one or more input/output devices in a set of peripheral devices 240, for example, the wireless communication system 244, the touchscreen 243, the microphone 242, and the speaker 241.

The computer system 260 may control the functions of the vehicle 200 based on inputs received from various subsystems (for example, the propulsion system 210, the sensor system 220, and the control system 230) and the user interface 270. For example, the computer system 260 may use an input from the control system 230 to control the steering unit 236, to avoid an obstacle detected by the sensor system 220 and the obstacle avoidance system 237. In some embodiments, the computer system 260 may operate to control many aspects of the vehicle 200 and the subsystems of the vehicle.

Optionally, one or more of the foregoing components may be installed separately from or associated with the vehicle 200. For example, the memory 263 may partially or completely separated from the vehicle 200. The foregoing components may be communicatively coupled together in a wired and/or wireless manner.

Optionally, the foregoing components are merely examples. During actual application, the components in the foregoing modules may be added or removed according to an actual requirement. FIG. 2b should not be construed as a limitation on embodiments of this application.

It should be noted that the vehicle includes but is not limited to an unmanned vehicle, an intelligent vehicle (for example, an automated guided vehicle (automated guided vehicle, AGV)), an electric vehicle, a digital vehicle, and an intelligent manufacturing vehicle.

A parking space opening detection method provided in this application may be applied to a field of advanced driving assistance systems (advanced driving assistant systems, ADASs), automated driving systems, intelligent driving systems, or the like, and is particularly applicable to an automated parking-related function, for example, an automated parking assistance (automated parking assist, APA) technology, a remote parking (remote parking assist, RPA) technology, or an automated valet parking (automated valet parking, AVP) technology. Parking space information detected in the parking space opening detection method may include but is not limited to a parking space opening of a parking space, for example, a predicted parking space type may be further included. The parking space opening detection method may alternatively be applied to use of a more advanced function by using the parking space information as a constraint, for example, performing three-dimensional modeling based on the parking space information. This is not limited in this embodiment of this application.

As described in the background, parking space detection needs to be performed in an automated parking process. In some scenarios, to ensure smooth parking, parking space opening prediction, parking space type prediction, and the like further need to be performed. In this case, how to get rid of a limitation imposed by a use scenario and further improve accuracy and a generalization capability of these technologies is still an important problem to be urgently resolved.

Based on this, embodiments of this application provide a parking space opening detection method and apparatus, to improve accuracy of parking space opening detection and improve a generalization capability of a parking space detection model. The method and the apparatus are based on a same technical concept. Because problem-resolving principles of the method and the apparatus are similar, mutual reference may be made to implementations of the apparatus and the method. Repeated details are not described again. In addition, in embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

It should be noted that in embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B each may be singular or plural. A character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c each may be singular or plural.

In addition, unless otherwise specified, ordinal numbers such as "first" and "second" mentioned in embodiments of this application are intended to distinguish between a plurality of objects, but are not intended to limit priorities or importance degrees of the plurality of objects. For example, a first device and a second device are merely used to distinguish between different electronic devices, but do not indicate different priorities, importance degrees, or the like of the two devices. For example, in some embodiments, method steps performed by the first device and method steps performed by the second device may be exchanged.

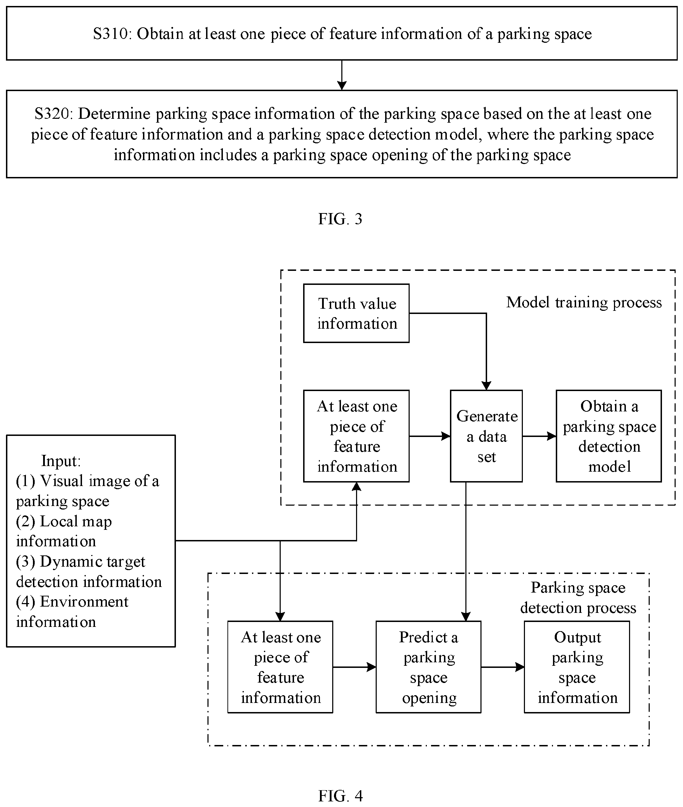

With reference to FIG. 3 to FIG. 6, the following specifically describes the parking space opening detection method provided in embodiments of this application.

FIG. 3 is a schematic flowchart of a parking space opening detection method according to an embodiment of this application. The method may be performed by a parking space opening detection apparatus. The parking space opening detection apparatus may be deployed in the vehicle management server 102 in FIG. 2a, or may be deployed in the vehicle in FIG. 2b. As shown in FIG. 3, the method may include the following steps.

S310: The parking space opening detection apparatus obtains at least one piece of feature information of a parking space.

For example, the at least one piece of feature information may include but is not limited to at least one of the following feature information of the parking space: a length, a width, a type, information about another parking space in a predetermined range around the parking space, information about obstacles inside and outside the parking space, information about a distance between the parking space and the vehicle, and coordinate information of the parking space in a coordinate system of the vehicle.

The parking space 2 shown in FIG. 1a is used as an example. A length of the segmentation line P1P4 (or P2P3) may indicate the parking space length, and a length of the segmentation line P1P2 (or P3P4) may indicate the parking space width.

Based on a parking space size, the parking space type may include a large-sized parking space and a small-sized parking space. The large-sized parking space is, for example, 15.6 meters in length and 3.25 meters in width, and is applicable to medium-sized and large-sized vehicles. The small-sized parking space is, for example, 6 meters in length and 2.5 meters in width, and is applicable to a small-sized vehicle. Based on a parking space arrangement manner, the parking space type may include a balanced parking space, a tilted parking space, and a vertical parking space. The balanced parking space is, for example, 6 meters in length and 2.5 meters in width. The tilted parking space (for example, a tilt angle of 30°, 45°, or 60°) is, for example, 6 meters in tilt length and 2.8 meters in width, and a vertical distance between two oblique lines is maintained, for example, at a standard of 2.5 meters. The vertical parking space is greater than or equal to 5 meters in length and is, for example, 2.5 meters in width. An optimal standard parking space size is usually 2.5 m x 5.3 m. Based on a parking space border color, the parking space type may include a yellow parking space, a white parking space, a blue parking space, and a green parking space. The yellow parking space is a dedicated parking space. Common yellow dedicated parking spaces include parking spaces dedicated for police, epidemic prevention, new energy vehicles, and emergency vehicles. Related words may also be marked on parking space signs and within marking lines. The white parking space is a paid parking space and is currently a most common parking space. Parking time of a white solid-line parking space is not specified. Parking time of a white dashed-dotted-line parking space is specified. Specific parking time is subject to a parking space marking. The blue parking space is a free parking space, but parking time of the blue parking space is specified. A free parking time period is indicated on a road or on a sign. Green parking spaces are used only in a few cities, are limited-time free parking spaces, meet short-term parking needs for limited time and free of charge, and can address temporary parking needs of citizens for shopping, affair handling, and the like. The parking space type is not limited in this embodiment of this application.

The information about the another parking space in the predetermined range around the parking space may include, for example, parking space information of the parking space 1 in FIG. 1a. The predetermined range may be, for example, a range of 1 meter around the parking space, or another preset range value. This is not limited in this embodiment of this application.

The information about the obstacles inside and outside the parking space may include information indicating whether there is a parking space lock, another vehicle, or another person or object that affects parking inside the parking space, and information indicating whether there is another vehicle, or another person or object that affects parking outside the parking space. For example, the information about the obstacle inside the parking space may include status information of a wheel stop in the parking space, for example, information indicating that there is a wheel stop or no wheel stop in the parking space. A dashed-dotted line in FIG. 1a indicates that a wheel stop in the parking space 2 is optional. Alternatively, the information about the obstacle inside the parking space may include parking space lock information, for example, a use state or a non-use state of the parking space lock. For example, the information about the obstacle outside the parking space may include information about a road edge/wall in a predetermined range around the parking space, and the predetermined range may be a range of 0 meters to 1 meter.

The information about the distance between the parking space and the vehicle may be the distance S1 and the distance S2 (refer to FIG. 1a and FIG. 1b) described in the foregoing descriptions, or may be distances between centers of four borders of the parking space and a head of the vehicle. A manner of defining the information about the distance is not limited in this embodiment of this application.

The coordinate system of the vehicle may be specifically a coordinate system established by using a vehicle center as a coordinate origin, a width direction of the vehicle as an x-axis, a length direction of the vehicle as a y-axis, and an upward direction perpendicular to the vehicle as a z-axis. The coordinate information of the parking space in the coordinate system of the vehicle is a relative coordinate system of the parking space. After obtaining absolute coordinate information (for example, longitude and latitude information and altitude information) of the parking space, the parking space opening detection apparatus may convert the absolute coordinate information into the coordinate information in the coordinate system of the vehicle. Details are not described herein again.

In this embodiment of this application, when performing S310, the parking space opening detection apparatus may obtain the at least one piece of feature information of the parking space through at least one technical means. For example, the parking space opening detection apparatus may obtain environment information inside the parking space and/or outside the parking space by using at least one sensor associated with the vehicle, and extract the at least one piece of feature information from the environment information inside the parking space and/or outside the parking space.

In a specific implementation, the at least one sensor may include but is not limited to a surround-view camera, an ultrasonic radar, a lidar, or the like installed on the vehicle. The surround-view camera may be configured to capture a visual image of the parking space, and may provide the visual image for the parking space opening detection apparatus. The parking space opening detection apparatus may parse the visual image to extract, from the visual image, the length, the width, the information about the distance between the parking space and the vehicle, the information about the another parking space in the predetermined range around the parking space, and other feature information of the parking space, or determine the parking space type, the coordinate information of the parking space in the coordinate system of the vehicle, and other feature information based on the extracted feature information. The ultrasonic radar may sense, by using a laser, a target in an environment in which the vehicle is located. The lidar may sense, by using a laser, a target in an environment in which the vehicle is located. The parking space opening detection apparatus may parse, by using a dynamic target detection method, the target sensed by the ultrasonic radar or the lidar, to determine whether there is an obstacle inside or outside the parking space.

For another example, the at least one sensor may include a GPS of the vehicle, and the GPS may be any sensor configured to estimate a geographical location of the vehicle. The parking space opening detection apparatus may obtain, based on the geographical location provided by the GPS, local map (local map) information at the geographical location, to determine information about static obstacles inside and outside the parking space, for example, a wall, a road edge, and a fence.

It should be understood that this is merely an example of describing the parking space feature information obtained in this embodiment of this application and the technical means for obtaining the feature information and does not constitute any limitation. During specific application, the parking space opening detection apparatus may alternatively obtain other feature information, and obtain the feature information by using a corresponding technical means. Details are not described herein again.

S320: The parking space opening detection apparatus determines parking space information of the parking space based on the at least one piece of feature information and a parking space detection model. For example, the parking space information may include a parking space opening of the parking space.

In this embodiment of this application, the parking space detection model may be specifically a parking space opening detection model, or may be a machine learning model that is pre-trained according to a requirement, for example, a decision tree model.

As shown in FIG. 4, when the parking space detection model is trained in a model training process, a model training apparatus may perform feature extraction on massive input parking space data (for example, a visual image of a parking space, local map information, dynamic target detection information, and environment information, where for specific details, reference may be made to the foregoing related descriptions with reference to S310, and details are not described herein again) by using a method similar to that in S310, to obtain feature information of different parking spaces. In addition, the model training apparatus may obtain truth value information for the different parking spaces, to generate a training data set based on the feature information of the different parking spaces and the obtained truth value information, and then perform model training by using the training data set, to obtain the parking space detection model. Further, the parking space detection model obtained through training may be used in a parking space detection process in this embodiment of this application, to predict the parking space opening and the like of the parking space, to output the parking space information. The parking space information includes the predicted parking space opening.

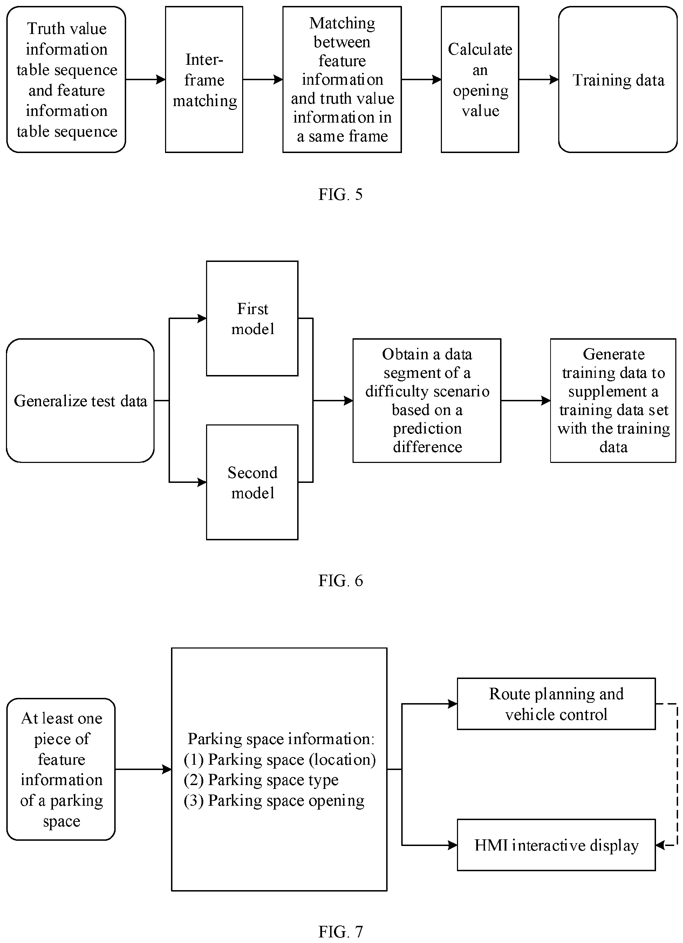

For example, the parking space detection model is used to predict the parking space opening. When the model training apparatus generates the training data set, as shown in FIG. 5, different truth values may be set for the four borders of the parking space, for example, 0, 1, 2, and 3. Further, the model training apparatus may perform inter-frame matching (for example, a timestamp difference is less than a first threshold) based on a truth value information table sequence and a feature information table sequence, and calculate an opening value, for example, any one of 0, 1, 2, and 3, of any parking space border based on a status of matching between feature information and truth value information in a same frame (for example, an intersection over union (intersection over union, IOU) is less than a second threshold), to obtain a training label of each border of the different parking spaces. Further, the model training apparatus may generate the training data set based on the obtained feature information and training label.

In this embodiment of this application, the model training apparatus may further obtain data of a difficulty scenario through data mining, to gradually enrich the training data set, thereby improving robustness of the parking space detection model.

For example, for the data mining process, refer to FIG. 6. Test data is generalized. The test data is used for prediction of a first model to obtain first prediction data. In addition, the test data is used for prediction of a second model to obtain second prediction data. The data of the difficulty scenario (for example, referred to as a target scenario) is obtained based on a difference between the first prediction data and the second prediction data. Training data is generated based on the data of the difficulty scenario, and is supplemented to the training data set in FIG. 4.

It should be noted that both the first model and the second model herein may be deep learning models. The first model is obtained through training by using data in a first range, the second model is obtained through training by using data in a second range, and the first range is greater than the second range. The first model is obtained through training by using data in a large range, and therefore has a complex model structure and a large quantity of parameters, and is more suitable for different scenarios. Although prediction accuracy of the first model is better than prediction accuracy of the second model, real-time performance of the first model is poorer than real-time performance of the second model in the field of vehicle-assisted driving. In this embodiment of this application, related data in the difficulty scenario can be supplemented based on the difference between the prediction data obtained by using the first model and the prediction data obtained by using the second model, thereby helping improve robustness of a to-be-trained parking space detection model.

Further, the model training apparatus may perform iterative training based on the obtained training data set until a better model parameter is obtained, and then may stop model training.

In this embodiment of this application, for example, the parking space detection model is a decision tree model. During training of the decision tree model, for example, the following parameters may be set, including but not limited to: a quantity N of decision trees, a maximum depth (maxDepth) of a decision tree, a quantity of classes nClass (n=4, indicating the four borders of the parking space), a learning rate r, a positive sample weight/negative sample weight (posWeight/negWeight), a sample random sampling rate baggingFrac, and a sampling frequency baggingFreq.

A model expression of the decision tree model may be shown as follows:

$$F(X) = f_0(X) + \sum_{m=1}^{N} f_m(X) \quad (1)$$

X indicates any parking space feature, and m indicates an $m^{th}$ decision tree, where m≤N, and m and N each are an integer greater than or equal to 1.

Based on the foregoing parameters and the model expression, the decision tree model may be trained by performing the following steps:

(1) Initialize $f_0(X) = 0$.
(2) Learn the $m^{th}$ (m = 1,2, ..., N) decision tree:

(a) Calculate a learning target of the current tree.
(b) Traverse all segmentation points of all features based on all samples under a current node, and obtain an optimal segmentation point, to complete learning of the current node.
(c) Learn parameters of left and right subtrees until learning of the entire decision tree is completed, and then enter a next round of iterative learning.

After model training ends, the parking space detection model in this embodiment of this application may be obtained.

S320 may be implemented by using the parking space detection model. In this way, the at least one piece of feature information obtained for the to-be-detected parking space in S310 is separately used as X, prediction is performed by using the parking space detection model, and class probabilities of the four borders of the parking space are calculated by using the following expression (2):

$$Proba\_((1,4)) = softmax(F(X)) \quad (2)$$

Based on a class probability value [0, 1] of the parking space opening, a class with a highest probability is selected as a predicted value of the parking space opening. Predicted values are 0, 1, 2, and 3 that correspond to the four borders of the parking space.

Therefore, the parking space information of the parking space may be obtained, where the parking space information may include the parking space opening.

In this way, the model training process and the parking space detection process that is based on the parking space detection model in this embodiment of this application are described in detail with reference to the accompanying drawings and embodiments. In the method, the training data set may be obtained by using the parking space feature information, the parking space detection model may be generated based on the training data set, and the parking space opening may be predicted by using the parking space detection model. This can reduce a prediction rate of the parking space opening and improve a generalization capability of the model. An input may include but is not limited to a visual image, local map information, dynamic target detection information, environment information, and the like, so that environment sensing information such as obstacles around the parking space can be better fused and used. This helps reduce the prediction rate of the parking space opening and improve the generalization capability of the model. The extracted parking space feature information is diversified, which helps reduce the prediction rate of the parking space opening and improve the generalization capability of the model. In addition, a data mining policy is used to obtain the data of the difficulty scenario, to enrich the training data set, thereby improving the robustness of the parking space detection model.

Further, as shown in FIG. 7, the parking space information obtained by using the foregoing method may be provided to a route planning unit and a vehicle control unit of the vehicle, so that the route planning unit and the vehicle control unit implement parking route planning and vehicle control in a parking process based on the parking space information, to implement automated parking. In addition, the parking space information may be provided to a human-machine interface (human-machine interface, HMI) and then is output from the HMI, so that a user can view the parking space (including the parking space opening), determine whether to start parking, and view a parking route, a dynamic parking process, and the like. A function of the parking space information is not limited in this embodiment of this application. Details are not described herein again.

An embodiment of this application further provides a parking space opening detection apparatus, configured to perform the method performed by the parking space opening detection apparatus in the foregoing method embodiments. For related features, refer to the foregoing method embodiments. Details are not described herein again.

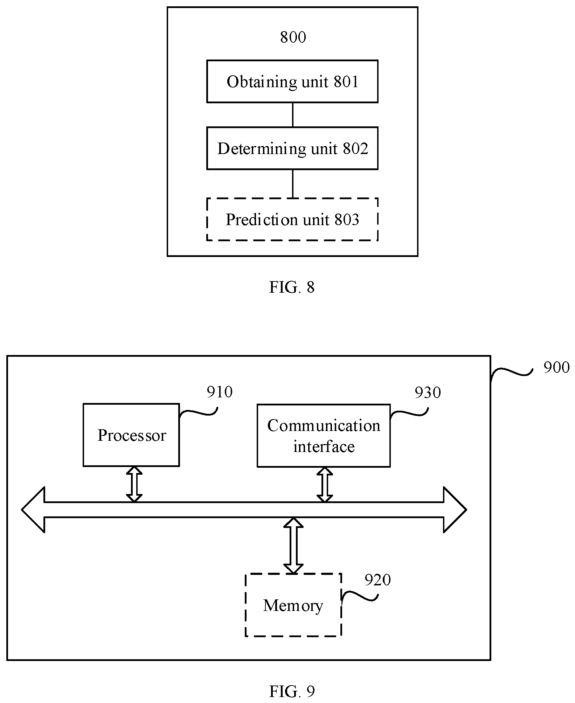

As shown in FIG. 8, a communication apparatus 800 may include: an obtaining unit 801, configured to obtain at least one piece of feature information of a parking space; and a determining unit 802, configured to determine parking space information of the parking space based on the at least one piece of feature information and a parking space detection model, where the parking space information includes a parking space opening of the parking space.

In a possible design, the at least one piece of feature information includes at least one of the following feature information of the parking space: a length, a width, a type, information about another parking space in a predetermined range around the parking space, information about obstacles inside and outside the parking space, information about a distance between the parking space and a vehicle, and coordinate information of the parking space in a coordinate system of the vehicle.

In a possible design, the obtaining unit 801 is specifically configured to: obtain environment information inside the parking space and/or outside the parking space by using at least one sensor associated with the vehicle; and extract the at least one piece of feature information from the environment information inside the parking space and/or outside the parking space.

In a possible design, the apparatus further includes: a prediction unit 803, configured to: obtain first prediction data based on test data and a first model; and obtain second prediction data based on the test data and a second model, where the first model and the second model are deep learning models, the first model is obtained through training by using data in a first range, the second model is obtained through training by using data in a second range, and the first range is greater than the second range. The obtaining unit 801 is further configured to: obtain a data segment of a target scenario based on a difference between the first prediction data and the second prediction data; and obtain a training data set based on the data segment of the target scenario, where the training data set is used to obtain the parking space detection model through training.

In a possible design, the parking space detection model includes a decision tree model. For example, a model parameter of the decision tree model includes at least one of the following: a quantity of decision trees, a maximum depth of a decision tree, a quantity of classes, a learning rate, a positive sample weight/negative sample weight, and a sample random sampling rate and a sampling frequency.

It should be understood that division of units in the apparatus is merely logical function division. In an actual implementation, all or some of the units may be integrated into one physical entity or may be physically separated. In addition, the unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor such as a central processing unit (Central Processing Unit, CPU) or a microprocessor, and the memory is a memory inside the apparatus or a memory outside the apparatus. Alternatively, the unit in the apparatus may be implemented in a form of hardware circuit, and the functions of some or all of the units may be implemented through a design of the hardware circuit. The hardware circuit may be understood as one or more processors. For example, in an implementation, the hardware circuit is an application-specific integrated circuit (application-specific integrated circuit, ASIC), and functions of some or all of the units are implemented through a design of a logical relationship between elements in the circuit. For another example, in another implementation, the hardware circuit may be implemented by using a programmable logic device (programmable logic device, PLD). A field programmable gate array (Field Programmable Gate Array, FPGA) is used as an example. The field programmable gate array may include a large quantity of logic gate circuits, and a connection relationship between the logic gate circuits is configured by using a configuration file, to implement the functions of some or all of the foregoing units. All of the units of the foregoing apparatus may be implemented in a form of software invoked by a processor, or may be implemented in a form of hardware circuit, or some of the units are implemented in a form of software invoked by a processor, and the remaining units are implemented in a form of hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of system-on-a-chip (system-on-a-chip, SoC). The SoC may include at least one processor, configured to implement any one of the methods or implement functions of the units of the apparatus. Types of the at least one processor may be different, for example, the at least one processor includes a CPU and an FPGA, a CPU and an artificial intelligence processor, a CPU and a GPU, and the like.

In a simple embodiment, a person skilled in the art may figure out that the communication apparatus in the foregoing embodiments may be in a form shown in FIG. 9.

An apparatus 900 shown in FIG. 9 includes at least one processor 910 and a communication interface 930. In an optional design, the apparatus may further include a memory 920.

In this embodiment of this application, a specific connection medium between the processor 910 and the memory 920 is not limited.

In the apparatus shown in FIG. 9, when communicating with another device, the processor 910 may perform data transmission by using the communication interface 930.

When the communication apparatus uses the form shown in FIG. 9, the processor 910 in FIG. 9 may invoke computer executable instructions stored in the memory 920, so that the apparatus 900 can perform any one of the foregoing method embodiments.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

The memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. As an example description rather than a limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, so that the processor performs the method according to any one of the foregoing embodiments.

For example, in this embodiment of this application, the processor is an integrated circuit chip, and has a signal processing capability. For example, the processor may be an FPGA, may be a general-purpose processor, a DSP, an ASIC, or another programmable logic device, a discrete gate or a transistor logic device, or a discrete hardware component, or may be a system-on-a-chip (system-on-a-chip, SoC), a CPU, a network processor (network processor, NP), or a micro controller unit (micro controller unit, MCU), or may be a PLD or another integrated chip, and may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies. In embodiments of this application, unless otherwise stated or there is a logic conflict, terms and/or descriptions between embodiments are consistent and may be mutually referenced, and technical features in different embodiments may be combined based on an internal logical relationship thereof, to form a new embodiment.

**Claims**

1. A parking space opening detection method, comprising:

   obtaining at least one piece of feature information of a parking space; and
   determining parking space information of the parking space based on the at least one piece of feature information and a parking space detection model, wherein the parking space information comprises a parking space opening of the parking space.

2. The method according to claim 1, wherein the at least one piece of feature information comprises at least one of the following feature information of the parking space: a length, a width, a type, information about another parking space in a predetermined range around the parking space, information about obstacles inside and outside the parking space, information about a distance between the parking space and the vehicle, and coordinate information of the parking space in a coordinate system of the vehicle.

3. The method according to claim 1 or 2, wherein the obtaining at least one piece of feature information of a parking space comprises:

   obtaining environment information inside the parking space and/or outside the parking space by using at least one sensor associated with the vehicle; and
   extracting the at least one piece of feature information from the environment information inside the parking space and/or outside the parking space.

4. The method according to any one of claims 1 to 3, wherein the method further comprises:

   obtaining first prediction data based on test data and a first model;
   obtaining second prediction data based on the test data and a second model, wherein the first model and the second model are deep learning models, the first model is obtained through training by using data in a first range, the second model is obtained through training by using data in a second range, and the first range is greater than the second range;

obtaining data of a target scenario based on a difference between the first prediction data and the second prediction data; and

obtaining a training data set based on the data of the target scenario, wherein the training data set is used to obtain the parking space detection model through training.

5. The method according to any one of claims 1 to 4, wherein the parking space detection model comprises a decision tree model.

6. A parking space opening detection apparatus, comprising:

an obtaining unit, configured to obtain at least one piece of feature information of a parking space; and

a determining unit, configured to determine parking space information of the parking space based on the at least one piece of feature information and a parking space detection model, wherein the parking space information comprises a parking space opening of the parking space.

7. The apparatus according to claim 6, wherein the at least one piece of feature information comprises at least one of the following feature information of the parking space: a length, a width, a type, information about another parking space in a predetermined range around the parking space, information about obstacles inside and outside the parking space, information about a distance between the parking space and the vehicle, and coordinate information of the parking space in a coordinate system of the vehicle.

8. The apparatus according to claim 6 or 7, wherein the obtaining unit is specifically configured to:

obtain environment information inside the parking space and/or outside the parking space by using at least one sensor associated with the vehicle; and

extract the at least one piece of feature information from the environment information inside the parking space and/or outside the parking space.

9. The apparatus according to any one of claims 6 to 8, wherein the apparatus further comprises:

a prediction unit, configured to: obtain first prediction data based on test data and a first model; and obtain second prediction data based on the test data and a second model, wherein the first model and the second model are deep learning models, the first model is obtained through training by using data in a first range, the second model is obtained through training by using data in a second range, and the first range is greater than the second range, wherein

the obtaining unit is further configured to: obtain data of a target scenario based on a difference between the first prediction data and the second prediction data; and obtain a training data set based on the data of the target scenario, wherein the training data set is used to obtain the parking space detection model through training.

10. The apparatus according to any one of claims 6 to 9, wherein the parking space detection model comprises a decision tree model.

11. A communication apparatus, comprising a processor and a memory, wherein

the memory is configured to store a program; and

the processor is configured to execute the program stored in the memory, so that the apparatus implements the method according to any one of claims 1 to 5.

12. A computer-readable storage medium, comprising computer-readable instructions, wherein when the computer-readable instructions are executed, the method according to any one of claims 1 to 5 is implemented.

13. A computer program product, wherein when the computer program product runs on a computer, the computer is enabled to perform the method according to any one of claims 1 to 5.

14. A terminal device, comprising a unit configured to implement the method according to any one of claims 1 to 5.

FIG. 1a

FIG. 1b

FIG. 2a

FIG. 2b

Vehicle 200

Propulsion system 210
- Engine 214
- Energy source 213
- Transmission apparatus 212
- Wheel 211

Sensor system 220
- Global positioning system 226
- Inertial measurement unit 225
- Millimeter-wave radar 224
- Camera sensor 223
- Lidar 222
- Brake 221

Control system 230
- Obstacle avoidance system 237
- Steering unit 236
- Throttle 235
- Brake unit 234
- Sensor fusion algorithm 233
- Computer vision system 232
- Route control system 231

Peripheral device 240
- Wireless communication system 244
- Touchscreen 243
- Microphone 242
- Speaker 241

User interface 270

Power supply 250

Computer system 260
- Processor 261
- Transceiver 262
- Memory 263
  - Instructions 2631

S310: Obtain at least one piece of feature information of a parking space

S320: Determine parking space information of the parking space based on the at least one piece of feature information and a parking space detection model, where the parking space information includes a parking space opening of the parking space

FIG. 3

Model training process

Truth value information

At least one piece of feature information → Generate a data set → Obtain a parking space detection model

Input:
(1) Visual image of a parking space
(2) Local map information
(3) Dynamic target detection information
(4) Environment information

Parking space detection process

At least one piece of feature information → Predict a parking space opening → Output parking space information

FIG. 4

```
┌──────────────┐     ┌──────────┐     ┌──────────────┐     ┌──────────┐     ┌──────────────┐
│ Truth value  │     │          │     │   Matching   │     │          │     │              │
│ information   │     │  Inter-  │     │   between    │     │Calculate │     │              │
│table sequence│ ──► │  frame   │ ──► │   feature    │ ──► │   an     │ ──► │ Training data│
│ and feature   │     │ matching │     │  information  │     │ opening  │     │              │
│ information   │     │          │     │and truth value│     │  value   │     │              │
│table sequence│     │          │     │information in │     │          │     │              │
│              │     │          │     │ a same frame  │     │          │     │              │
└──────────────┘     └──────────┘     └──────────────┘     └──────────┘     └──────────────┘
```

FIG. 5

```
                      ┌──────────┐
                      │  First   │
                  ┌─► │  model   │ ─┐
                  │   └──────────┘  │
┌──────────────┐  │                 │   ┌──────────────┐     ┌──────────────┐
│              │  │                 │   │  Obtain a data│     │   Generate    │
│              │  │                 └─► │  segment of a │     │training data to│
│  Generalize  │ ─┤                     │difficulty scenario│ │ supplement a  │
│  test data   │  │                 ┌─► │  based on a   │ ──► │training data set│
│              │  │                 │   │  prediction   │     │with the training│
│              │  │                 │   │  difference   │     │     data      │
└──────────────┘  │   ┌──────────┐  │   └──────────────┘     └──────────────┘
                  │   │ Second   │  │
                  └─► │  model   │ ─┘
                      └──────────┘
```

FIG. 6

```
                      ┌───────────────────────────┐
                      │                           │          ┌──────────────────┐
┌──────────────┐      │                           │          │Route planning and │
│ At least one │      │ Parking space information: │     ┌──► │  vehicle control  │ ─┐
│  piece of    │      │ (1) Parking space (location)│    │    └──────────────────┘  │
│  feature     │ ──►  │ (2) Parking space type     │ ───┤                           │
│ information   │      │ (3) Parking space opening  │    │    ┌──────────────────┐  │
│ of a parking │      │                           │     └──► │HMI interactive display│◄─┘
│   space      │      │                           │          └──────────────────┘
└──────────────┘      └───────────────────────────┘
```

FIG. 7

800

Obtaining unit 801

Determining unit 802

Prediction unit 803

FIG. 8

900

910
Processor

930
Communication
interface

920
Memory

FIG. 9

## INTERNATIONAL SEARCH REPORT

| International application No. |
| --- |
| **PCT/CN2023/104957** |

**A. CLASSIFICATION OF SUBJECT MATTER**

G08G1/14(2006.01)i; B60W30/06(2006.01)i

According to International Patent Classification (IPC) or to both national classification and IPC

**B. FIELDS SEARCHED**

Minimum documentation searched (classification system followed by classification symbols)

G08G1/-; B60W30/-; G06K9/-

Documentation searched other than minimum documentation to the extent that such documents are included in the fields searched

Electronic data base consulted during the international search (name of data base and, where practicable, search terms used)

CNTXT, ENTXTC, OETXT, VEN, WPABSC: 华为技术有限公司; 刘广峰, 苏潇然, 姜雨; 车位, 检测, 深度学习, 神经网络, 机器学习, 决策树, 模型, 网络, 入口, 开口, 扩充, 补充, 测试, 预测, 差, 第二, 第一, 训练; parking, slot, space, spot, CNN, deep, entrance, feature, machine, tree, learning, neutral network, first, second, model, supplement, predict.

**C. DOCUMENTS CONSIDERED TO BE RELEVANT**

| Category* | Citation of document, with indication, where appropriate, of the relevant passages | Relevant to claim No. |
| --- | --- | --- |
| X | CN 113537105 A (BEIJING JINGWEI HIRAIN TECHNOLOGIES CO., LTD.) 22 October 2021 (2021-10-22) description, paragraphs 87, 96-100, and 117-120, and figures 2-4 | 1, 3-6, 8-14 |
| X | CN 113901961 A (HOLOMATIC TECHNOLOGY (BEIJING) CO., LTD.) 07 January 2022 (2022-01-07) description, paragraphs 14 and 21-25 | 1, 3-6, 8-14 |
| X | CN 115346193 A (SHANGHAI BAOLONG LINGMU AUTOMOBILE TECHNOLOGY CO., LTD.) 15 November 2022 (2022-11-15) description, paragraphs 67 and 70-77 | 1, 3-6, 8-14 |
| Y | CN 113537105 A (BEIJING JINGWEI HIRAIN TECHNOLOGIES CO., LTD.) 22 October 2021 (2021-10-22) description, paragraphs 87, 96-100, and 117-120, and figures 2-4 | 2,7 |
| Y | CN 115346193 A (SHANGHAI BAOLONG LINGMU AUTOMOBILE TECHNOLOGY CO., LTD.) 15 November 2022 (2022-11-15) description, paragraphs 67 and 70-77 | 2,7 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 August 2023** | **04 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/104957** |

**C.     DOCUMENTS CONSIDERED TO BE RELEVANT**

| Category* | Citation of document, with indication, where appropriate, of the relevant passages | Relevant to claim No. |
| --- | --- | --- |
| Y | CN 113901961 A (HOLOMATIC TECHNOLOGY (BEIJING) CO., LTD.) 07 January 2022 (2022-01-07)<br>      description, paragraphs 14 and 21-25 | 2,7 |
| Y | CN 112668588 A (HOLOMATIC TECHNOLOGY (BEIJING) CO., LTD.) 16 April 2021 (2021-04-16)<br>      description, paragraphs 34-38 | 2,7 |
| A | US 2020294310 A1 (NVIDIA CORP.) 17 September 2020 (2020-09-17)<br>      entire document | 1-14 |
| A | CN 114511023 A (TENCENT TECHNOLOGY (SHENZHEN) CO., LTD.) 17 May 2022 (2022-05-17)<br>      entire document | 1-14 |
| A | CN 114842446 A (HOZON NEW ENERGY AUTOMOBILE CO., LTD.) 02 August 2022 (2022-08-02)<br>      entire document | 1-14 |

Form PCT/ISA/210 (second sheet) (July 2022)

**INTERNATIONAL SEARCH REPORT**
Information on patent family members

| International application No. |
|---|
| **PCT/CN2023/104957** |

| Patent document cited in search report | | | Publication date (day/month/year) | Patent family member(s) | | | Publication date (day/month/year) |
|---|---|---|---|---|---|---|---|
| CN | 113537105 | A | 22 October 2021 | None | | | |
| CN | 113901961 | A | 07 January 2022 | None | | | |
| CN | 115346193 | A | 15 November 2022 | None | | | |
| CN | 112668588 | A | 16 April 2021 | None | | | |
| US | 2020294310 | A1 | 17 September 2020 | US | 2022092855 | A1 | 24 March 2022 |
| | | | | DE | 112020000369 | T5 | 21 October 2021 |
| | | | | WO | 2020190880 | A1 | 24 September 2020 |
| | | | | US | 11195331 | B2 | 07 December 2021 |
| | | | | JP | 2022523614 | A | 26 April 2022 |
| CN | 114511023 | A | 17 May 2022 | None | | | |
| CN | 114842446 | A | 02 August 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   CN 202211469399